# EUROPEAN PATENT APPLICATION

(11) **EP 4 311 329 A1**
(43) Date of publication of application: **24.01.2024**
(21) Application number: 21930788.1
(22) Date of filing: 17.03.2021
(51) Int. Cl.: H04W 72/04, H04W 74/08, H04L 5/00

(54) **BANDWIDTH PART CONFIGURATION METHOD, BANDWIDTH PART CONFIGURATION APPARATUS, AND STORAGE MEDIUM**

(71) Applicant: Beijing Xiaomi Mobile Software Co., Ltd., Beijing 100085 (CN)
(72) Inventor: MU, Qin, Beijing 100085 (CN)
(74) Representative: dompatent von Kreisler Selting Werner - Partnerschaft von Patent- und Rechtsanwälten mbB
(86) International application number: PCT/CN2021/081392
(87) International publication number: WO 2022/193195

(57) **Abstract**

The present disclosure relates to a bandwidth part configuration method, a bandwidth part configuration apparatus, and a storage medium. The bandwidth part (BWP) configuration method is applied to a terminal, and the method comprises: determining a first initial BWP pair and a second initial BWP pair, wherein the first initial BWP pair comprises a first initial up link BWP and a first initial down link BWP, the second initial BWP pair comprises a second initial up link BWP and a second initial down link BWP, and the bandwidths of the initial up link BWP and the initial down link BWP of the first initial BWP pair are less than or equal to a first threshold value. By means of the present disclosure, the flexibility of BWP configurations can be ensured, and system overheads can be saved on.

## Description

### TECHNICAL FIELD

The present disclosure relates to the technical field of wireless communication, and more particularly to a bandwidth part configuration method, a bandwidth part configuration device and a storage medium.

### BACKGROUND

In a new generation of communication technology, a terminal may work based on a bandwidth part (BWP). That is, the terminal does not need to monitor an entire bandwidth, but receives and sends data in a part of a system bandwidth. In a time division duplexing (TDD) system, sending and receiving of uplink and downlink data can share a same bandwidth part. Therefore, in order to reduce a delay of uplink and downlink switching, it is required that a downlink (DL) BWP and an uplink (UL) BWP have a same center frequency point.

For a reduced capability (Redcap) terminal, the capability of the Redcap terminal may monitor an initial downlink bandwidth part (DL initial BWP). However, an initial uplink bandwidth part (UL initial BWP) may exceed a bandwidth range monitored by the Redcap terminal. In view of this, in the related art, if the UL initial BWP is configured separately for the Redcap terminal based on a frequency point of the DL initial BWP, the scheduling and configuration of a system will be limited. If independent DL initial BWP and UL initial BWP are configured for the Redcap terminal, the system message overhead will increase.

### SUMMARY

In order to overcome problems existing in the related art, the present disclosure provides a bandwidth part configuration method, a bandwidth part configuration device and a storage medium.

According to a first aspect of embodiments of the present disclosure, a bandwidth part (BWP) configuration method is provided, which is performed by a terminal and includes: determining a first initial BWP pair and a second initial BWP pair. The first initial BWP pair includes a first initial uplink BWP and a first initial downlink BWP, and the second initial BWP pair includes a second initial uplink BWP and a second initial downlink BWP; and bandwidths of the initial uplink BWP and the initial downlink BWP of the first initial BWP pair are less than or equal to a first threshold.

In an embodiment, the first threshold is determined based on a capability of a first type of terminal. The capability of the first type of terminal is lower than a capability of a second type of terminal.

In an embodiment, the first initial uplink BWP is configured to carry at least one following information corresponding to the first type of terminal: first physical random access channel (RPACH) information, a first uplink data transmission and first uplink control information.

In an embodiment, the second initial uplink BWP is configured to carry at least one following information corresponding to the second type of terminal: second RPACH information, a second uplink data transmission and second uplink control information.

In an embodiment, the method further includes: in response to the terminal being a first type of terminal, monitoring a first type of information in the first initial BWP pair, and monitoring a second type of information in the second initial BWP. The first type of information is a random access message corresponding to the first type of terminal; and the second type of information is a system message.

In an embodiment, the method further includes: in response to the terminal being the first type of terminal, during a process of accessing a network, determining configuration information of the first initial BWP pair based on the second type of information; and performing at least one of a random access and a radio resource control (RRC) connection in the first initial BWP pair based on the configuration information of the first initial BWP pair.

In an embodiment, the method further includes: in response to the terminal being the first type of terminal and the first type of terminal being in an idle state, monitoring a paging message based on the second initial BWP pair.

In an embodiment, the method further includes: in response to the terminal being the first type of terminal, determining to switch to the second initial BWP pair, and measuring a synchronization signal block (SSB).

According to a second aspect of embodiments of the present disclosure, a bandwidth part (BWP) configuration method is provided, which is performed by a network side device and includes: determining a first initial BWP pair and a second initial BWP pair. The first initial BWP pair includes a first initial uplink BWP and a first initial downlink BWP, and the second initial BWP pair includes a second initial uplink BWP and a second initial downlink BWP; and bandwidths of the initial uplink BWP and the initial downlink BWP of the first initial BWP pair are less than or equal to a first threshold.

In an embodiment, the first threshold is determined based on a capability of a first type of terminal. The capability of the first type of terminal is lower than a capability of a second type of terminal.

In an embodiment, the first initial uplink BWP is configured to carry at least one following information corresponding to the first type of terminal: first physical random access channel (RPACH) information, a first uplink data transmission and first uplink control information.

In an embodiment, the second initial uplink BWP is configured to carry at least one following information corresponding to the second type of terminal: second RPACH information, a second uplink data transmission and second uplink control information.

In an embodiment, the first initial BWP pair is configured to carry a first type of information and/or a second type of information, and the second initial BWP pair is configured to carry the second type of information. The first type of information is a random access message corresponding to the first type of terminal. The second type of information is a system message.

In an embodiment, the method further includes: sending a paging message based on the second initial BWP.

According to a third aspect of embodiments of the present disclosure, a BWP configuration device is provided, which is applied to a terminal and includes: a determining module configured to determine a first initial BWP pair and a second initial BWP pair. The first initial BWP pair includes a first initial uplink BWP and a first initial downlink BWP, and the second initial BWP pair includes a second initial uplink BWP and a second initial downlink BWP; and bandwidths of the initial uplink BWP and the initial downlink BWP of the first initial BWP pair are less than or equal to a first threshold.

In an embodiment, the first threshold is determined based on a capability of a first type of terminal. The capability of the first type of terminal is lower than a capability of a second type of terminal.

In an embodiment, the first initial uplink BWP is configured to carry at least one following information corresponding to the first type of terminal: first physical random access channel (RPACH) information, a first uplink data transmission and first uplink control information.

In an embodiment, the second initial uplink BWP is configured to carry at least one following information corresponding to the second type of terminal: second RPACH information, a second uplink data transmission and second uplink control information.

In an embodiment, the determining module is configured to: in response to the terminal being a first type of terminal, monitor a first type of information in the first initial BWP pair, and monitor a second type of information in the second initial BWP. The first type of information is a random access message corresponding to the first type of terminal; and the second type of information is a system message.

In an embodiment, the determining module is configured to: in response to the terminal being the first type of terminal, during a process of accessing a network, determine configuration information of the first initial BWP pair based on the second type of information; and perform at least one of a random access and a RRC connection in the first initial BWP pair based on the configuration information of the first initial BWP pair.

In an embodiment, the determining module is configured to: in response to the terminal being the first type of terminal and the first type of terminal being in an idle state, monitor a paging message based on the second initial BWP pair.

In an embodiment, the determining module is configured to: in response to the terminal being the first type of terminal, determine to switch to the second initial BWP pair, and measure a synchronization signal block (SSB).

According to a fourth aspect of embodiments of the present disclosure, a BWP configuration device is provided, which is applied to a network side device and includes: a determining module configured to determine a first initial BWP pair and a second initial BWP pair. The first initial BWP pair includes a first initial uplink BWP and a first initial downlink BWP, and the second initial BWP pair includes a second initial uplink BWP and a second initial downlink BWP; and bandwidths of the initial uplink BWP and the initial downlink BWP of the first initial BWP pair are less than or equal to a first threshold.

In an embodiment, the first threshold is determined based on a capability of a first type of terminal. The capability of the first type of terminal is lower than a capability of a second type of terminal.

In an embodiment, the first initial uplink BWP is configured to carry at least one following information corresponding to the first type of terminal: first physical random access channel (RPACH) information, a first uplink data transmission and first uplink control information.

In an embodiment, the second initial uplink BWP is configured to carry at least one following information corresponding to the second type of terminal: second RPACH information, a second uplink data transmission and second uplink control information.

In an embodiment, the first initial BWP pair is configured to carry a first type of information and/or a second type of information, and the second initial BWP pair is configured to carry the second type of information. The first type of information is a random access message corresponding to the first type of terminal. The second type of information is a system message.

In an embodiment, the device further includes: a sending module. The sending module is configured to send a paging message based on the second initial BWP.

According to a fifth aspect of embodiments of the present disclosure, a BWP configuration device is provided, which includes: a processor; and a memory configured to store a processor-executable instruction. The processor is configured to: execute the BWP configuration method as described in the first aspect or any embodiment of the first aspect; or execute the BWP configuration method as described in the second aspect or any embodiment of the second aspect.

According to a sixth aspect of embodiments of the present disclosure, a non-transitory computer-readable storage medium is provided. The non-transitory computer-readable storage medium has stored therein instructions that, when executed by a processor of a mobile terminal, cause the mobile terminal to perform the BWP configuration method as described in the first aspect or any embodiment of the first aspect; or the BWP configuration method as described the second aspect or any embodiment of the second aspect.

The technical solutions provided in embodiments of the present disclosure may include following advantageous effects. In embodiments of the present disclosure, two different initial BWP pairs are determined, and the bandwidths of the initial uplink BWP and the initial downlink BWP of one of the two BWP pairs are less than or equal to the first threshold, such that the system overhead is reduced, and the BWP can be configured flexibly.

It is to be understood that both the foregoing general description and the following detailed description are illustrative and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a schematic architecture diagram of a communication system including a network device and terminals according to an illustrative embodiment.
FIG. 2 is a schematic diagram showing configuration of a separate UL initial BWP according to an illustrative embodiment.
FIG. 3 is a flow chart showing a bandwidth part configuration method according to an illustrative embodiment.
FIG. 4 is a flow chart showing another bandwidth part configuration method according to an illustrative embodiment.
FIG. 5 is a flow chart showing another bandwidth part configuration method according to an illustrative embodiment.
FIG. 6 is a flow chart showing another bandwidth part configuration method according to an illustrative embodiment.
FIG. 7 is a flow chart showing another bandwidth part configuration method according to an illustrative embodiment.
FIG. 8 is a flow chart showing another bandwidth part configuration method according to an illustrative embodiment.
FIG. 9 is a flow chart showing another bandwidth part configuration method according to an illustrative embodiment.
FIG. 10 is a block diagram showing a bandwidth part configuration device according to an illustrative embodiment.
FIG. 11 is a block diagram showing another bandwidth part configuration device according to an illustrative embodiment.
FIG. 12 is a block diagram showing a device for bandwidth part configuration according to an illustrative embodiment.
FIG. 13 is a block diagram showing another device for bandwidth part configuration according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present disclosure. Instead, they are merely examples of devices and methods consistent with some aspects related to the present disclosure as recited in the appended claims.

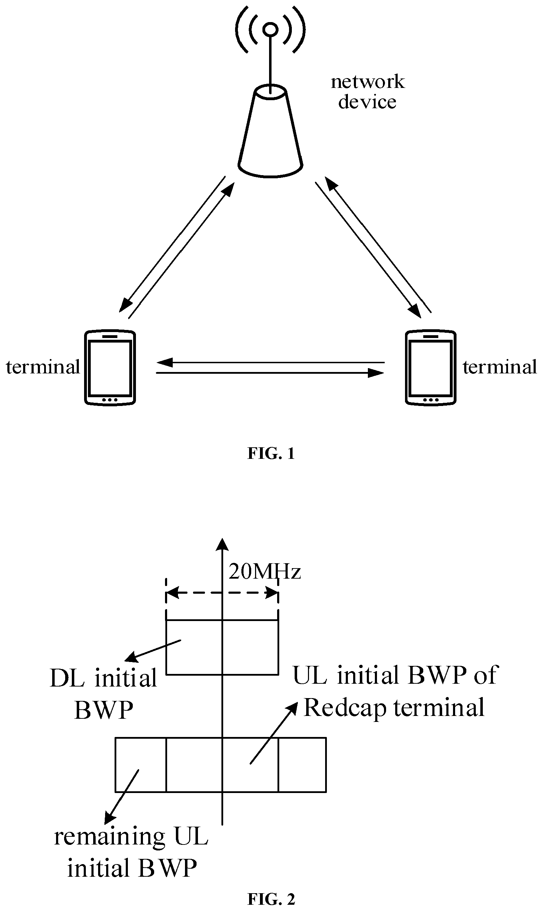

FIG. 1 is a schematic architecture diagram of a communication system including a network device and terminals according to an illustrative embodiment. A communication method provided by the present disclosure may be applied to the architecture diagram of the communication system shown in FIG. 1. As shown in FIG. 1, the network side device may send a signaling based on the architecture shown in FIG. 1.

It may be understood that the communication system including the network device and the terminals shown in FIG. 1 is only illustrative. The wireless communication system may also include other network devices, such as a core network device, a wireless relay device, and a wireless backhaul device, which are not shown in FIG 1. The number of network devices and the number of terminals included in the wireless communication system are not limited in embodiments of the present disclosure.

It may be further understood that the wireless communication system in embodiments of the present disclosure is a network that provides a wireless communication function. The wireless communication system may employ different communication technologies, such as code division multiple access (CDMA), wideband code division multiple access (WCDMA), time division multiple access (TDMA), frequency division multiple access (FDMA), orthogonal frequency-division multiple access (OFDMA), single carrier frequency division multiple access (SC-FDMA), and carrier sense multiple access with collision avoidance. The network may be classified into a 2nd generation (2G) network, a 3G network, a 4G network, or a future evolution network, such as a 5G network, which may also be referred to as a new radio (NR) network, according to the capacity, rate, delay and other factors of different networks. For ease of description, the wireless communication network will be sometimes abbreviated as a network in the present disclosure.

Further, the network device involved in the present disclosure may also be referred to as a radio access network device. The radio access network device may be a base station, an evolved node B, a home base station, an access point (AP) in a wireless fidelity (WIFI) system, a wireless relay node, a wireless backhaul node, a transmission point (TP), a transmission and reception point (TRP) or the like, or may also be a gNB in a NR system, or may also be a component or a part of a device that constitutes a base station, etc. The network device may also be a vehicle-mounted device when it is used in a vehicle to everything (V2X) communication system. It is to be understood that the specific technology and specific device form adopted by the network device are not limited in embodiments of the present disclosure.

Further, the terminal involved in the present disclosure, which may also be referred to as a terminal device, a user equipment (UE), a mobile station (MS), a mobile terminal (MT), etc., is a device that provides voice and/or data connectivity to a user. For example, the terminal may be a handheld device, a vehicle-mounted device, or the like that has a wireless connection function. At present, some examples of the terminal are a smart phone (a mobile phone), a pocket personal computer (PPC), a palmtop computer, a personal digital assistant (PDA), a notebook computer, a tablet computer, a wearable device, a vehicle-mounted device, or the like. In addition, the terminal device may also be a vehicle-mounted device when it is used in a vehicle to everything (V2X) communication system. It is to be understood that the specific technology and specific device form adopted by the terminal are not limited in embodiments of the present disclosure.

In a new generation of communication technology, a terminal may work based on a bandwidth part (BWP). That is, the terminal does not need to monitor an entire bandwidth, but receives and sends data on a part of a system bandwidth. In a time division duplexing (TDD) system, sending and receiving of uplink and downlink data can share a same bandwidth part. Therefore, in order to reduce a delay of uplink and downlink switching, it is required that a downlink (DL) BWP and an uplink (UL) BWP have a same center frequency point.

Due to vigorous development of the Internet of Things, it has brought many conveniences to human life and work. A machine type communication (MTC) technology, and a narrow band Internet of things (NB-IoT) technology are typical representatives of a cellular Internet of things technology. At present, these technologies have been used widely in many fields such as smart cities (such as meter readings), smart agriculture (such as collection of information like the temperature and humidity), and smart transportation (such as shared bicycles).

In the communication system, for scenarios with low speed and high delay (such as scenarios like the meter readings, environmental monitoring, etc.) in Internet of Things services, two technologies, i.e., the MTC and the NB-IoT are proposed in the related art. At present, the NB-IoT technology can support a maximum rate of several hundred K, and the MTC technology can support a maximum rate of several M. However, with the continuous development of Internet of Things services (such as monitoring, smart home, wearable devices, industrial sensor detections, and the like services), a speed of tens to 100 M is generally required, and the requirement for the delay is also relatively high. Therefore, in the communication system, the MTC and NB-IoT technologies can no longer meet the requirements of the current Internet of Things services. On the other hand, the MTC and NB-IoT technologies are generally deployed in basements, in the wild, or in other scenarios where it is not easy to charge or replace batteries. Therefore, terminals associated with the MTC and NB-IoT technologies are subject to a limitation of hardware, so that a coverage ability is not as good as that of general wireless communication terminals. Further, in consideration of the application environment, power saving of devices is also a characteristic of the MTC and NB-IoT technologies. In view of this, it has been proposed to design a new user equipment in 5G NR to meet the requirements of this type of mid-end IoT device. In current 3GPP (3rd Generation Partnership Project) standardization, this new type of terminal is called a reduced capability (Redcap) terminal or a NR-lite (reduced new radio) for short. A bandwidth configured for a Redcap terminal is relatively small.

In a Redcap terminal, the capability of the Redcap terminal is that the Redcap terminal has a bandwidth monitoring capability of 20 MHz at a radio frequency (RF) 1, and for a downlink channel, the Redcap terminal is configured with an initial BWP separately. Its implementations may take different manners.

In an implementation, the Redcap terminal still monitors an original initial downlink BWP according to the capability of the Redcap terminal to monitor the initial downlink BWP. For an initial uplink BWP, reference can be made to FIG. 2, which is a schematic diagram showing configuration of a separate initial uplink BWP according to an illustrative embodiment. As shown in FIG. 2, as the initial uplink BWP may exceed the bandwidth monitoring capability of the terminal, configuration of the separate initial uplink BWP based on a frequency band of the initial downlink BWP will limit the scheduling and configuration of the system.

Another implementation is to configure independent initial downlink BWP and initial uplink BWP for the Redcap terminal, but it will generate additional system message overhead.

In view of the problems involved in the above implementations, the present disclosure provides a BWP configuration method. Different BWP pairs are configured, and each BWP pair includes an initial downlink BWP and an initial uplink BWP, so that the flexibility of the BWP configuration is guaranteed, the system overhead is reduced.

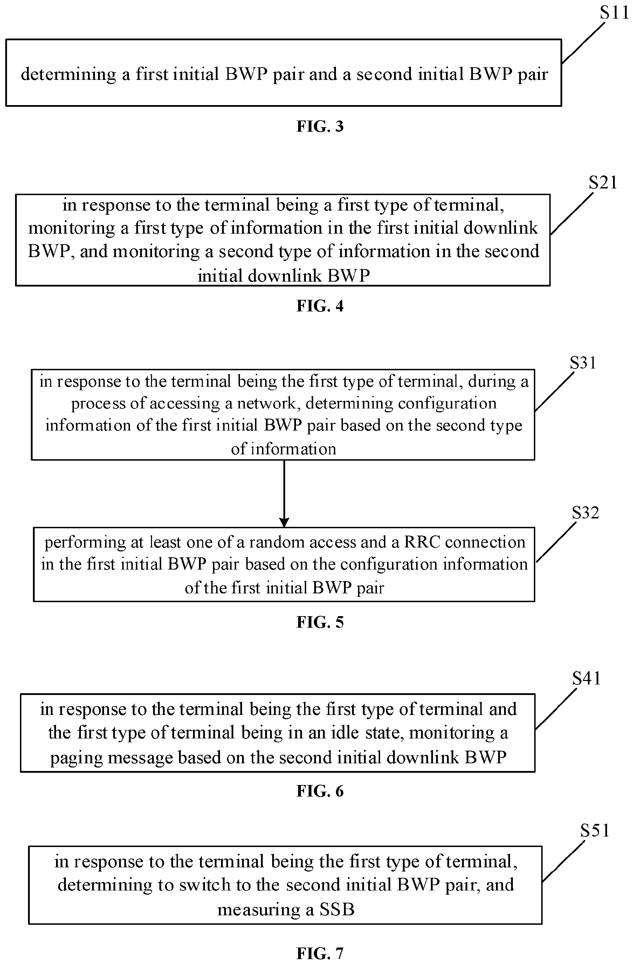

FIG. 3 is a flow chart showing a bandwidth part configuration method according to an illustrative embodiment. As shown in FIG. 3, the bandwidth part configuration method is used in a terminal, and includes a following step.

In step S 11, a first initial BWP pair and a second initial BWP pair are determined.

In an embodiment of the present disclosure, the first initial BWP pair includes a first initial uplink BWP and a first initial downlink BWP, and the second initial BWP pair includes a second initial uplink BWP and a second initial downlink BWP. The first initial uplink BWP of the first initial BWP pair is smaller than the second initial uplink BWP of the second initial BWP pair, and the first initial downlink BWP may be the same as the second initial downlink BWP. The first initial downlink BWP may also be different from the second initial downlink BWP.

In an embodiment of the present disclosure, bandwidths of the initial uplink BWP and the initial downlink BWP of the first initial BWP pair are less than or equal to a first threshold.

In some embodiments of the present disclosure, the terminal includes a first type of terminal and a second type of terminal. The first type of terminal may be a terminal with a relatively low capability, such as a Redcap terminal, and the second type of terminal may be a terminal with a relatively high capability, such as a normal terminal. The first threshold may be determined according to a bandwidth supported by the first type of terminal. The capability of the first type of terminal is lower than the capability of the second type of terminal. For example, a terminal bandwidth of the first type of terminal is smaller than a terminal bandwidth of the second type of terminal.

In an illustrative embodiment of the present disclosure, a network side device supports a configuration of at least two initial BWP pairs, and the first initial BWP pair does not exceed the bandwidth of the first type of terminal. The second initial BWP pair may be configured based on the bandwidth of the second type of terminal. The first initial BWP pair and the second initial BWP pair may carry different information.

In an embodiment of the present disclosure, the first initial uplink BWP in the first initial BWP pair and the second initial uplink BWP in the second initial BWP pair may carry different information. The different information include at least one of:
physical random access channel (RPACH) information;
different uplink data transmissions; and
different uplink control information.

Different RPACH information carried on the first initial uplink BWP and the second initial uplink BWP may be for different types of terminals.

In some embodiments of the present disclosure, the first initial uplink BWP may be configured to carry at least one following information corresponding to the first type of terminal: first RPACH information, a first uplink data transmission and first uplink control information.

In some embodiments of the present disclosure, the second initial uplink BWP is configured to carry at least one following information corresponding to the second type of terminal: second RPACH information, a second uplink data transmission and second uplink control information.

In an embodiment of the present disclosure, as described above, the first initial BWP pair and the second initial BWP pair may carry different information. The first initial BWP pair is configured to carry a first type of information and/or a second type of information, and the second initial BWP pair is configured to carry the second type of information.

FIG. 4 is a flow chart showing a bandwidth part configuration method according to an illustrative embodiment. As shown in FIG. 4, the bandwidth part configuration method is used in a terminal, and includes a following step.

In step S21, in response to the terminal being a first type of terminal, a first type of information is monitored in the first initial downlink BWP, and a second type of information is monitored in the second initial downlink BWP.

In some embodiments of the present disclosure, the first type of information may be a random access message of the first type of terminal. For example, the first initial downlink BWP may carry a random access response (RAR), a random access message 4 (Msg.4), and other messages in a random access process. The second type of information may be a system message. For example, the second initial downlink BWP may carry a synchronization signal block (synchronization signal and PBCH block, SSB), remaining minimum system information (RMSI), a paging message, etc. Both the first type of terminal and the second type of terminal need to monitor the second initial BWP pair.

In some embodiments of the present disclosure, the second type of information further includes a message in a random access process of the second type of terminal and configuration information of the first initial BWP pair. The configuration information of the first initial BWP pair may be carried by the RSMI. The terminal may determine the configuration information of the first initial BWP pair according to the RSMI on the second initial BWP pair.

FIG. 5 is a flow chart showing a bandwidth part configuration method according to an illustrative embodiment. As shown in FIG. 5, the bandwidth part configuration method is used in a terminal, and includes following steps.

In step S31, in response to the terminal being a first type of terminal, during a process of accessing a network, configuration information of the first initial BWP pair is determined based on the second type of information.

In an embodiment of the present disclosure, when the terminal needs to access the network, the terminal monitors the second initial BWP pair, and determines the second type of information carried on the second initial BWP pair. Measurement of the SSB, synchronization and reading of the system message are performed on the second initial downlink BWP. The terminal determines a type of itself, and in response to determining that the type of terminal itself is the first type of terminal, further determines the configuration information of the first initial BWP pair based on the second type of information.

In step S32, at least one of a random access and a RRC connection is performed in the first initial BWP pair based on the configuration information of the first initial BWP pair.

In some embodiments of the present disclosure, after determining the configuration information of the first initial BWP pair, the first type of terminal performs the random access to the network and/or the establishment of the RRC connection on the first initial downlink BWP of the first initial BWP pair.

FIG. 6 is a flow chart showing a bandwidth part configuration method according to an illustrative embodiment. As shown in FIG. 6, the bandwidth part configuration method is used in a terminal, and includes a following step.

In step S41, in response to the terminal being a first type of terminal and the first type of terminal being in an idle state, a paging message is monitored based on the second initial downlink BWP.

In an embodiment of the present disclosure, the first type of terminal enters the idle state after a connection state is released, or a current state of the first type of terminal is the idle state, then it is determined to monitor the paging message on the second initial downlink BWP.

FIG. 7 is a flow chart showing a bandwidth part configuration method according to an illustrative embodiment. As shown in FIG. 7, the bandwidth part configuration method is used in a terminal, and includes a following step.

In step S51, in response to the terminal being a first type of terminal, it is determined to switch to the second initial BWP pair, and a SSB is measured.

In an embodiment of the present disclosure, the terminal is the first type of terminal, and it needs to perform a measurement based on the SSB, then it is determined to perform the measurement of the SSB based on the second initial BWP pair. When a current initial BWP of the first type of terminal is the first BWP pair, it is determined to switch from the first BWP pair to the second initial downlink BWP of the second initial BWP pair, and the measurement of the SSB is performed based on the second initial downlink BWP.

In embodiments of the present disclosure, the above embodiments of the BWP configuration method may be applied in the TDD system.

Based on the same/similar concept, embodiments of the present disclosure also provide a bandwidth part configuration method.

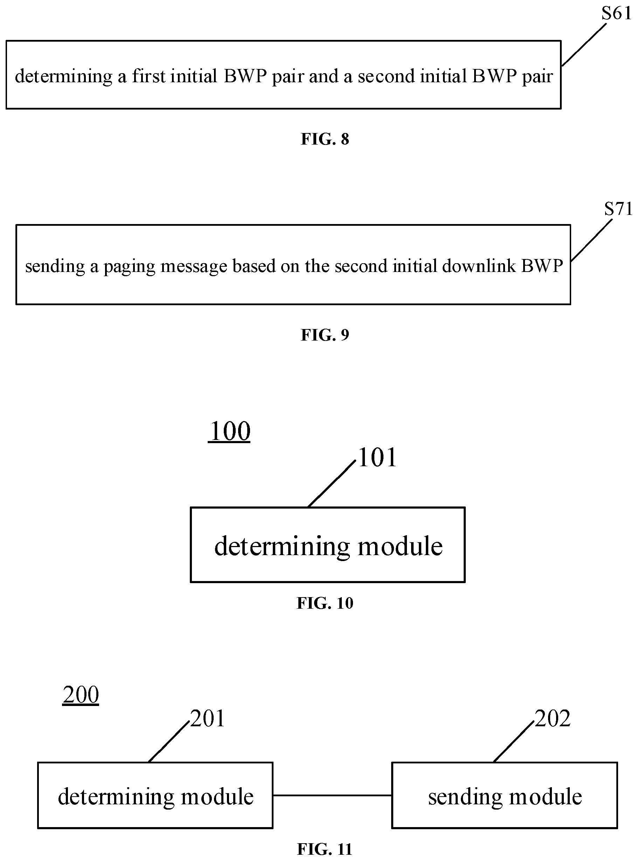

FIG. 8 is a flow chart showing a bandwidth part configuration method according to an illustrative embodiment. As shown in FIG. 8, the bandwidth part configuration method is used in a network side device, and includes a following step.

In step S61, a first initial BWP pair and a second initial BWP pair are determined.

In an embodiment of the present disclosure, the first initial BWP pair includes a first initial uplink BWP and a first initial downlink BWP, and the second initial BWP pair includes a second initial uplink BWP and a second initial downlink BWP. The first initial uplink BWP of the first initial BWP pair is smaller than the second initial uplink BWP of the second initial BWP pair, and the first initial downlink BWP may be the same as the second initial downlink BWP. The first initial downlink BWP may also be different from the second initial downlink BWP.

In an embodiment of the present disclosure, bandwidths of the initial uplink BWP and the initial downlink BWP of the first initial BWP pair are less than or equal to a first threshold.

In some embodiments of the present disclosure, the terminal includes a first type of terminal and a second type of terminal. The first type of terminal may be a terminal with a relatively low capability, such as a Redcap terminal, and the second type of terminal may be a terminal with a relatively high capability, such as a normal terminal. The first threshold may be determined according to a bandwidth supported by the first type of terminal. The capability of the first type of terminal is smaller than the capability of the second type of terminal.

In an illustrative embodiment of the present disclosure, the network side device supports a configuration of at least two initial BWP pairs, and the first initial BWP pair does not exceed the bandwidth of the first type of terminal. The second initial BWP pair may be configured based on a bandwidth of the second type of terminal. The first initial BWP pair and the second initial BWP pair may carry different information.

In an embodiment of the present disclosure, the first initial uplink BWP in the first initial BWP pair and the second initial uplink BWP in the second initial BWP pair may carry different information. The different information include at least one of:
RPACH information;
different uplink data transmissions; and
different uplink control information.

Different RPACH information carried on the first initial uplink BWP and the second initial uplink BWP may be for different types of terminals.

In some embodiments of the present disclosure, the first initial uplink BWP may be configured to carry at least one following information corresponding to the first type of terminal: first RPACH information, a first uplink data transmission and first uplink control information.

In some embodiments of the present disclosure, the second initial uplink BWP is configured to carry at least one following information corresponding to the second type of terminal: second RPACH information, a second uplink data transmission and second uplink control information.

In an embodiment of the present disclosure, as described above, the first initial BWP pair and the second initial BWP pair may carry different information. The first initial BWP pair is configured to carry a first type of information and/or a second type of information, and the second initial BWP pair is configured to carry the second type of information.

In some embodiments of the present disclosure, the first type of information may be a random access message of the first type of terminal. For example, the first initial downlink BWP may carry a RAR, a Msg.4 and other messages in a random access process. The second type of information may be a system message. For example, the second initial downlink BWP may carry a SSB, RMSI, a paging message, etc. Both the first type of terminal and the second type of terminal need to monitor the second initial BWP pair.

In some embodiments of the present disclosure, the second type of information further includes a message in a random access process of the second type of terminal and configuration information of the first initial BWP pair. The configuration information of the first initial BWP pair may be carried by the RSMI. The terminal may determine the configuration information of the first initial BWP pair according to the RSMI on the second initial BWP pair.

In an embodiment of the present disclosure, when the terminal needs to access the network, the terminal monitors the second initial BWP pair, and determines the second type of information carried on the second initial BWP pair. Measurement of the SSB, synchronization and reading of the system message are performed on the second initial downlink BWP. The terminal determines a type of itself, and in response to determining that the type of terminal itself is the first type of terminal, further determines the configuration information of the first initial BWP pair based on the second type of information.

In some embodiments of the present disclosure, after determining the configuration information of the first initial BWP pair, the first type of terminal performs the random access to the network and/or the establishment of the RRC connection on the first initial downlink BWP of the first initial BWP pair.

FIG. 9 is a flow chart showing a bandwidth part configuration method according to an illustrative embodiment. As shown in FIG. 9, the bandwidth part configuration method is used in a terminal, and includes a following step.

In step S71, a paging message is sent based on the second initial downlink BWP.

In an embodiment of the present disclosure, the first type of terminal enters an idle state after a connection state is released, or a current state of the first type of terminal is the idle state, then it is determined to monitor the paging message on the second initial downlink BWP.

In an embodiment of the present disclosure, the terminal is the first type of terminal and it needs to perform a measurement based on the SSB, then it is determined to perform the measurement of the SSB based on the second initial BWP pair. When a current initial BWP of the first type of terminal is the first BWP pair, it is determined to switch from the first BWP pair to the second initial downlink BWP of the second initial BWP pair, and the measurement of the SSB is performed based on the second initial downlink BWP.

In embodiments of the present disclosure, the above embodiments of the BWP configuration method may be applied in the TDD system.

Based on the same concept, embodiments of the present disclosure also provide a bandwidth part configuration device.

It may be understood that, in order to implement the above-mentioned functions, the bandwidth part configuration device provided by embodiments of the present disclosure includes corresponding hardware structures and/or software modules for performing respective functions. Embodiments of the present disclosure may be implemented in a form of hardware or a combination of hardware and computer software in connection with units and algorithm steps of various examples disclosed in embodiments of the present disclosure. Whether a certain function is performed by hardware or by hardware driven by computer software depends on specific applications and design constraints of the technical solution. Those skilled in the art may use different methods to implement the described function for each specific application, but such implementations should not be regarded as beyond the scope of the technical solutions of embodiments of the present disclosure.

FIG. 10 is a block diagram showing a bandwidth part configuration device according to an illustrative embodiment. Referring to FIG. 10, the BWP configuration device 100 is applied to a terminal and includes a determining module 101.

The determining module 101 is configured to determine a first initial BWP pair and a second initial BWP pair. The first initial BWP pair includes a first initial uplink BWP and a first initial downlink BWP, and the second initial BWP pair includes a second initial uplink BWP and a second initial downlink BWP. Bandwidths of the initial uplink BWP and the initial downlink BWP of the first initial BWP pair are less than or equal to a first threshold.

In an embodiment of the present disclosure, the first threshold is determined based on a capability of a first type of terminal. The capability of the first type of terminal is lower than a capability of a second type of terminal.

In an embodiment of the present disclosure, the first initial uplink BWP is configured to carry at least one following information corresponding to the first type of terminal: first physical random access channel (RPACH) information, a first uplink data transmission and first uplink control information.

In an embodiment of the present disclosure, the second initial uplink BWP is configured to carry at least one following information corresponding to the second type of terminal: second RPACH information, a second uplink data transmission and second uplink control information.

In an embodiment of the present disclosure, the determining module 101 is configured to, in response to the terminal being a first type of terminal, monitor a first type of information in the first initial BWP pair, and monitor a second type of information in the second initial BWP. The first type of information is a random access message corresponding to the first type of terminal. The second type of information is a system message.

In an embodiment of the present disclosure, the determining module 101 is configured to, in response to the terminal being the first type of terminal, during a process of accessing a network, determine configuration information of the first initial BWP pair based on the second type of information; and perform at least one of a random access and a RRC connection in the first initial BWP pair based on the configuration information of the first initial BWP pair.

In an embodiment of the present disclosure, the determining module 101 is configured to, in response to the terminal being the first type of terminal and the first type of terminal being in an idle state, monitor a paging message based on the second initial BWP pair.

In an embodiment of the present disclosure, the determining module 101 is configured to, in response to the terminal being the first type of terminal, determine to switch to the second initial BWP pair, and measure a synchronization signal block (SSB).

FIG. 11 is a block diagram showing a bandwidth part configuration device according to an illustrative embodiment. Referring to FIG. 11, the BWP configuration device 200 is applied to a network side device and includes a determining module 201.

The determining module 201 is configured to determine a first initial BWP pair and a second initial BWP pair. The first initial BWP pair includes a first initial uplink BWP and a first initial downlink BWP, and the second initial BWP pair includes a second initial uplink BWP and a second initial downlink BWP. Bandwidths of the initial uplink BWP and the initial downlink BWP of the first initial BWP pair are less than or equal to a first threshold.

In an embodiment of the present disclosure, the first threshold is determined based on a capability of a first type of terminal. The capability of the first type of terminal is lower than a capability of a second type of terminal.

In an embodiment of the present disclosure, the first initial uplink BWP is configured to carry at least one following information corresponding to the first type of terminal: first physical random access channel (RPACH) information, a first uplink data transmission and first uplink control information.

In an embodiment of the present disclosure, the second initial uplink BWP is configured to carry at least one following information corresponding to the second type of terminal: second RPACH information, a second uplink data transmission and second uplink control information.

In an embodiment of the present disclosure, the first initial BWP pair is configured to carry a first type of information and/or a second type of information, and the second initial BWP pair is configured to carry the second type of information. The first type of information is a random access message corresponding to the first type of terminal. The second type of information is a system message.

In an embodiment of the present disclosure, the device further includes: a sending module 202.

The sending module 202 is configured to send a paging message based on the second initial BWP.

With respect to the devices in the above embodiments, the specific manners for performing operations for individual modules therein have been described in detail in the embodiments regarding the methods, which will not be elaborated herein.

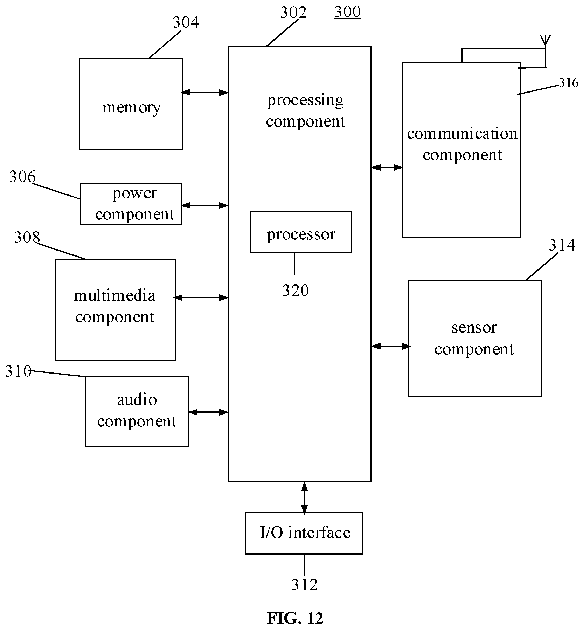

FIG. 12 is a block diagram showing a device 300 for bandwidth part configuration according to an illustrative embodiment. For example, the device 300 can be a mobile phone, a computer, a digital broadcast terminal, a messaging device, a game console, a tablet device, a medical device, a fitness device, a personal digital assistant, or the like.

Referring to FIG. 12, the device 300 may include one or more of the following components: a processing component 302, a memory 304, a power component 306, a multimedia component 308, an audio component 310, an input/output (I/O) interface 312, a sensor component 314, and a communication component 316.

The processing component 302 typically controls overall operations of the device 300, such as the operations associated with display, phone calls, data communications, camera operations, and recording operations. The processing component 302 can include one or more processors 320 to execute instructions to perform all or some of the steps in the above-described methods. Moreover, the processing component 302 may include one or more modules which facilitate the interaction between the processing component 302 and other components. For instance, the processing component 302 may include a multimedia module to facilitate the interaction between the multimedia component 308 and the processing component 302.

The memory 304 is configured to store various types of data to support the operation of the device 300. Examples of such data include instructions for any applications or methods operated on the device 300, contact data, phonebook data, messages, pictures, videos, etc. The memory 304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 306 provides power to various components of the device 300. The power component 306 may include a power management system, one or more power sources, and any other components associated with the generation, management, and distribution of power in the device 300.

The multimedia component 308 includes a screen providing an output interface between the device 300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 308 includes a front camera and/or a rear camera. The front camera and/or the rear camera may receive an external multimedia datum while the device 300 is in an operation mode, such as a photographing mode or a video mode. Each of the front camera and the rear camera may be a fixed optical lens system or have focus and optical zoom capability.

The audio component 310 is configured to output and/or input audio signals. For example, the audio component 310 includes a microphone (MIC) configured to receive an external audio signal when the device 300 is in an operation mode, such as a call mode, a recording mode, and a voice recognition mode. The received audio signal may be further stored in the memory 304 or transmitted via the communication component 316. In some embodiments, the audio component 310 further includes a speaker to output audio signals.

The I/O interface 312 provides an interface between the processing component 302 and peripheral interface modules, such as keyboards, click wheels, buttons, and the like. The buttons may include, but are not limited to, a home button, a volume button, a starting button, and a locking button.

The sensor component 314 includes one or more sensors to provide status assessments of various aspects of the device 300. For instance, the sensor component 314 may detect an open/closed status of the device 300, relative positioning of components, e.g., the display and the keypad, of the device 300. The sensor component 314 may also detect a change in position of the device 300 or a component of the device 300, a presence or absence of user contact with the device 300, an orientation or an acceleration/deceleration of the device 300, and a change in temperature of the device 300. The sensor component 314 may include a proximity sensor configured to detect the presence of nearby objects without any physical contact. The sensor component 314 may further include a light sensor, such as a CMOS or CCD image sensor, for use in imaging applications. In some embodiments, the sensor component 314 may further include an accelerometer sensor, a gyroscope sensor, a magnetic sensor, a pressure sensor, or a temperature sensor.

The communication component 316 is configured to facilitate communication, wired or wireless, between the device 300 and other devices. The device 300 can access a wireless network based on a communication standard, such as WiFi, 2G, or 3G, or a combination thereof. In an illustrative embodiment, the communication component 316 receives a broadcast signal or broadcast associated information from an external broadcast management system via a broadcast channel. In an illustrative embodiment, the communication component 316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the device 300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above-mentioned method.

In an illustrative embodiment, there is also provided a non-transitory computer readable storage medium including instructions, such as included in the memory 304, executable by the processor 320 in the device 300, for completing the above-mentioned method. For example, the non-transitory computer-readable storage medium may be a ROM, a random access memory (RAM), a CD-ROM, a magnetic tape, a floppy disc, an optical data storage device, and the like.

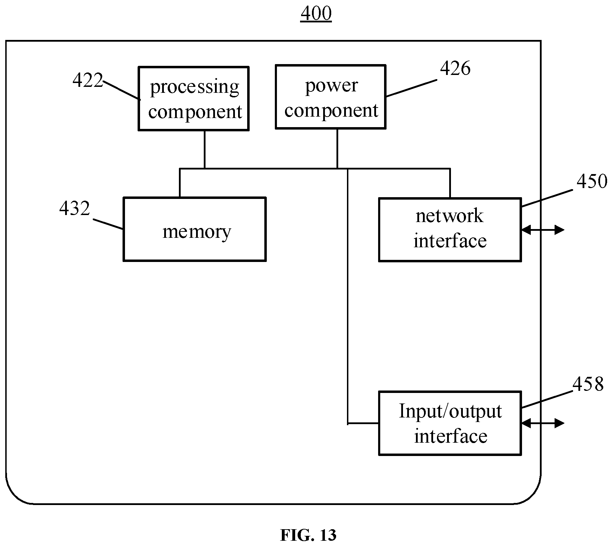

FIG. 13 is a block diagram showing a device 400 for bandwidth part configuration according to an illustrative embodiment. For example, the device 400 may be provided as a server. Referring to FIG. 13, the device 400 includes a processing component 422, which further includes one or more processors, and a memory resource represented by a memory 432 configured to store instructions executable by the processing component 422, such as application programs. The application programs stored in the memory 432 may include one or more modules each corresponding to a set of instructions. In addition, the processing component 422 is configured to execute instructions to perform the above-mentioned method.

The device 400 may also include a power component 426 configured to perform the power management of the device 400, a wired or wireless network interfaces 450 configured to connect the device 400 to a network, and an input/output (I/O) interface 458. The device 400 may operate an operating system stored in the memory 432, such as Windows ServerTM, Mac OS XTM, UnixTM, LinuxTM, FreeBSDTM, or the like.

It is further understood that "a plurality of' in this disclosure refers to two or more, and other quantifiers are similar thereto. The term "and/or" describes an associated relationship of associated objects, and means that there may be three relationships. For example, the expression of A and/or B indicates three cases, i.e., A exists alone, A and B exist at the same time, and B exists alone. The character "/" generally indicates that contextual objects are in an "or" relationship. "Alan", "said", and "the" in singular forms are intended to include plural forms, unless clearly indicated in the context otherwise.

It is further understood that terms such as "first" and "second" are used to describe various information, but these information should not be limited by these terms. These terms are only used for distinguishing information of the same type from each other and do not denote a particular order or degree of importance. As a matter of fact, the terms such as "first" and "second" may be used interchangeably. For example, first information may also be referred to as second information, and similarly, the second information may also be referred to as the first information, without departing from the scope of embodiments of the present disclosure.

It is further understood that although operations in embodiments of the present disclosure are described in a specific order in the accompanying drawings, it should not be understood that these operations are required to be performed in the specific order shown or in a serial order, or that all of the operations shown are required to be performed to obtain desired results. In certain circumstances, multitasking and parallel processing may be advantageous.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including such departures from the present disclosure as come within known or customary practice in the art. It is intended that the specification and examples be considered as exemplary only, with a true scope and spirit of the present disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A bandwidth part (BWP) configuration method, performed by a terminal and comprising:
determining a first initial BWP pair and a second initial BWP pair;
wherein the first initial BWP pair comprises a first initial uplink BWP and a first initial downlink BWP, and the second initial BWP pair comprises a second initial uplink BWP and a second initial downlink BWP; and
bandwidths of the initial uplink BWP and the initial downlink BWP of the first initial BWP pair are less than or equal to a first threshold.

2. The BWP configuration method according to claim 1, wherein the first threshold is determined based on a capability of a first type of terminal;
wherein the capability of the first type of terminal is lower than a capability of a second type of terminal.

3. The BWP configuration method according to claim 2, wherein the first initial uplink BWP is configured to carry at least one following information corresponding to the first type of terminal:
first physical random access channel (RPACH) information, a first uplink data transmission and first uplink control information.

4. The BWP configuration method according to claim 2, wherein the second initial uplink BWP is configured to carry at least one following information corresponding to the second type of terminal:
second RPACH information, a second uplink data transmission and second uplink control information.

5. The BWP configuration method according to claim 1, further comprising:
in response to the terminal being a first type of terminal, monitoring a first type of information in the first initial downlink BWP, and monitoring a second type of information in the second initial downlink BWP;
wherein the first type of information is a random access message corresponding to the first type of terminal; and the second type of information is a system message.

6. The BWP configuration method according to claim 5, further comprising:
in response to the terminal being the first type of terminal, during a process of accessing a network, determining configuration information of the first initial BWP pair based on the second type of information; and
performing at least one of a random access and a radio resource control (RRC) connection in the first initial BWP pair based on the configuration information of the first initial BWP pair.

7. The BWP configuration method according to claim 2 or 6, further comprising:
in response to the terminal being the first type of terminal and the first type of terminal being in an idle state, monitoring a paging message based on the second initial downlink BWP.

8. The BWP configuration method according to claim 1 or 6, further comprising:
in response to the terminal being a first type of terminal, determining to switch to the second initial BWP pair, and measuring a synchronization signal block (SSB).

9. A bandwidth part (BWP) configuration method, performed by a network side device and comprising:
determining a first initial BWP pair and a second initial BWP pair;
wherein the first initial BWP pair comprises a first initial uplink BWP and a first initial downlink BWP, and the second initial BWP pair comprises a second initial uplink BWP and a second initial downlink BWP; and
bandwidths of the initial uplink BWP and the initial downlink BWP of the first initial BWP pair are less than or equal to a first threshold.

10. The BWP configuration method according to claim 9, wherein the first threshold is determined based on a capability of a first type of terminal;
wherein the capability of the first type of terminal is lower than a capability of a second type of terminal.

11. The BWP configuration method according to claim 10, wherein the first initial uplink BWP is configured to carry at least one following information corresponding to the first type of terminal:
first physical random access channel (RPACH) information, a first uplink data transmission and first uplink control information.

12. The BWP configuration method according to claim 10, wherein the second initial uplink BWP is configured to carry at least one following information corresponding to the second type of terminal:
second RPACH information, a second uplink data transmission and second uplink control information.

13. The BWP configuration method according to claim 9, wherein the first initial downlink BWP is configured to carry a first type of information and/or a second type of information, and the second initial downlink BWP is configured to carry the second type of information; and
the first type of information is a random access message corresponding to the first type of terminal; and the second type of information is a system message.

14. The BWP configuration method according to claim 9 or 13, further comprising:
sending a paging message based on the second initial downlink BWP.

15. A BWP configuration device, applied to a terminal and comprising:
a determining module configured to determine a first initial BWP pair and a second initial BWP pair;
wherein the first initial BWP pair comprises a first initial uplink BWP and a first initial downlink BWP, and the second initial BWP pair comprises a second initial uplink BWP and a second initial downlink BWP; and
bandwidths of the initial uplink BWP and the initial downlink BWP of the first initial BWP pair are less than or equal to a first threshold.

16. A BWP configuration device, applied to a network side device and comprising:
a determining module configured to determine a first initial BWP pair and a second initial BWP pair;
wherein the first initial BWP pair comprises a first initial uplink BWP and a first initial downlink BWP, and the second initial BWP pair comprises a second initial uplink BWP and a second initial downlink BWP; and
bandwidths of the initial uplink BWP and the initial downlink BWP of the first initial BWP pair are less than or equal to a first threshold.

17. A BWP configuration device, comprising:
a processor; and
a memory configured to store a processor-executable instruction;
wherein the processor is configured to: execute the BWP configuration method according to any one of claims 1 to 8, or execute the BWP configuration method according to any one of claims 9 to 14.

18. A non-transitory computer-readable storage medium having stored therein instructions that, when executed by a processor of a mobile terminal, cause the mobile terminal to perform the BWP configuration method according to any one of claims 1 to 8, or the BWP configuration method according to any one of claims 9 to 14.
